# EUROPEAN PATENT APPLICATION

(11) **EP 4 804 538 A1**
(43) Date of publication of application: **09.09.2026**
(21) Application number: 24883796.5
(22) Date of filing: 10.04.2024
(51) Int. Cl.: H04N 21/426, H04N 21/443

(54) **TELEVISION, TELEVISION WAKE-UP METHOD, AND TELEVISION SYSTEM**

(30) Priority: 02.11.2023 CN 202311453278
(71) Applicant: Amlogic (Shanghai) Co., Ltd., Shanghai 201203 (CN)
(72) Inventor: ZHOU, Xiaoyong, Shanghai 201203 (CN); JIANG, Minglian, Shanghai 201203 (CN); ZHANG, Kuibao, Shanghai 201203 (CN); WU, Xiang, Shanghai 201203 (CN)
(74) Representative: Maiwald GmbH
(86) International application number: PCT/CN2024/087084
(87) International publication number: WO 2025/091781

(57) **Abstract**

The present disclosure relates to a television, a television wake-up method, and a television system. In the method, when the television enters sleep or standby state, a Bluetooth module in a system chip of the television sets the value of a television state register in a Bluetooth chip of the television to a first numerical value, so that the Bluetooth chip of the television can quickly and accurately obtain information about the television being in sleep or standby state through the numerical value in the television state register, which correspondingly helps improve the speed and reliability of the Bluetooth chip in obtaining information about the television entering sleep or standby state, thereby improving the speed and reliability of the television wake-up operation.

## Description

### TECHNICAL FIELD

The present disclosure relates to the technical field of televisions, and in particular, to a television, a television wake-up method, and a television system.

### BACKGROUND

A television (TV) is a device that uses electronic technology to transmit moving image pictures and audio signals, i.e., a television receiver, and is an important tool for broadcasting and video communication.

Traditional televisions are generally controlled by infrared remote control. The infrared light emitted by an infrared remote control is susceptible to being blocked by obstacles during transmission process. The characteristics of infrared transmission require the remote control to be directed at the television to achieve a satisfactory remote control effect, reducing the convenience of operation.

A Bluetooth remote control uses Bluetooth signals to remotely control a television, which can overcome the obstruction of obstacles and enable omnidirectional remote control of the television, and has therefore gained increasingly widespread application. However, the current television wake-up methods using Bluetooth remote controls suffer from the problems of low speed and poor reliability.

### SUMMARY

Some embodiments of the present disclosure provide a television, a television wake-up method, and a television system, to improve the wake-up speed and reliability of the television.

In some embodiments, a television wake-up method, comprising: when the television enters sleep or standby state, using a Bluetooth module in a system chip of the television to set a value of a television state register in a Bluetooth chip to a first numerical value; in response to a detection that the value of the television state register is the first numerical value, using a Bluetooth chip in a Bluetooth module assembly of the television to disconnect from a Bluetooth remote control and monitor a wake-up advertising packet transmitted from the Bluetooth remote control; in response to detecting a wake-up advertising packet transmitted from the Bluetooth remote control, using the Bluetooth chip to transmit a wake-up signal to a wake-up module in the system chip of the television; and in response to receiving the wake-up signal, using the wake-up module to wake up the television.

The technical solutions of embodiments of the present disclosure have the following advantages: in some embodiments, a television, a television wake-up method, and a television system provided by embodiments of the present disclosure, wherein in the television wake-up method, when the television enters sleep or standby state, the Bluetooth module setting a value of the television state register to a first numerical value, allowing the Bluetooth chip in the television's Bluetooth module assembly to quickly and accurately obtain information about whether the television is in sleep or standby state through the numerical value in the television's state register, compared to the breathing mechanism that determines whether a television has entered sleep or standby state through repeated exchanges of Host Controller Interface (HCI) commands and HCI events between the Bluetooth module and the Bluetooth chip, the embodiments of the present disclosure shortens the time it takes for the Bluetooth chip to detect when the television has entered sleep or standby state, which prevents the Bluetooth chip from incorrectly obtaining information about whether the television has entered sleep or standby state by avoiding the loss of HCI commands or events, correspondingly improving the speed and reliability of the Bluetooth chip in detecting when the television has entered sleep or standby state, thereby enhancing the speed and reliability of the television wake-up operation.

In some embodiments, the Bluetooth module comprises a Bluetooth driver; and setting a value of the television state register in the Bluetooth chip to a first numerical value comprises: the Bluetooth driver modifying the value of the television state register in the Bluetooth chip from a second numerical value to the first numerical value using a preset suspend function and a secure digital input and output interface, wherein the second numerical value is configured to indicate that the television is in a working state.

In some embodiments, the system chip further comprises a wake-up pin; and using the Bluetooth chip to transmit a wake-up signal to the wake-up module comprises: using the Bluetooth chip to pull the wake-up pin down to a preset first low level to transmit a wake-up signal to the wake-up module.

In some embodiments, the wake-up pin comprises a general purpose input/output interface.

In some embodiments, the Bluetooth module comprises a Bluetooth protocol stack; when the television and the Bluetooth remote control are in a connected state, the television wake-up method further comprising: using the Bluetooth chip to receive an advertising packet address and a wake-up identifier of the Bluetooth remote control transmitted by the Bluetooth remote control, and transmit the advertising packet address and the wake-up identifier to the Bluetooth protocol stack; using the Bluetooth protocol stack to receive the advertising packet address and wake-up identifier of the Bluetooth remote control, and transmit the advertising packet address and wake-up identifier of the Bluetooth remote control to the Bluetooth chip; and using the Bluetooth chip to receive and store the advertising packet address and wake-up identifier of the Bluetooth remote control; and using the Bluetooth chip to monitor a wake-up advertising packet transmitted from the Bluetooth remote control comprises: using the Bluetooth chip to receive an advertising packet and parse the received advertising packet to obtain the advertising packet address and an advertising command; and in response to a determination that the parsed advertising packet address and advertising command match the stored advertising packet address and wake-up identifier of the Bluetooth remote control, respectively, the Bluetooth chip determining that the wake-up advertising packet from the Bluetooth remote control has been detected.

In some embodiments, after using the wake-up module to wake up the television, the method further comprising: using the Bluetooth chip to re-establish a connection with the Bluetooth remote control.

In some embodiments, the Bluetooth module comprises a Bluetooth protocol stack; when the television enters sleep or standby state, the Bluetooth protocol stack enters sleep state; and using the Bluetooth chip to re-establish a connection with the Bluetooth remote control comprises: after the wake-up module wakes up the television, using the Bluetooth module to transmit a clear to send signal to the Bluetooth chip; in response to receiving the clear to send signal, using the Bluetooth chip to transmit a hardware error event to the Bluetooth protocol stack to restart the Bluetooth protocol stack; in response to successfully restarting the Bluetooth protocol stack, using the Bluetooth protocol stack to transmit a reconnection command to the Bluetooth chip; using the Bluetooth chip to monitor a connection advertising packet of the Bluetooth remote control in response to receiving the reconnection command; and in response to detecting the connection advertising packet transmitted by the Bluetooth remote control, using the Bluetooth chip to re-establish a connection with the Bluetooth remote control, enabling the Bluetooth protocol stack to re-establish a connection with the Bluetooth remote control via the Bluetooth chip.

In some embodiments, the system chip further comprises a clear to send pin; and transmitting a clear to send signal to the Bluetooth chip comprises: using the system chip to pull the clear to send pin down to a second low level, to transmit the clear to send signal to the Bluetooth chip.

In some embodiments, the clear to send pin comprises a universal asynchronous receiver-transmitter clear to send interface.

In some embodiments, the system chip is a system on chip.

In some embodiments, a television, comprising: a Bluetooth module, located within a system chip, configured to set a value of a television state register to a first numerical value when the television enters sleep or standby state, wherein the first numerical value is configured to indicate that the television is in sleep or standby state; a Bluetooth chip, located within a Bluetooth module assembly, the Bluetooth chip comprising a television state register, configured to disconnect from a Bluetooth remote control and monitor a wake-up advertising packet transmitted from the Bluetooth remote control in response to a detection that the value of the television state register is the first numerical value, and further configured to transmit a wake-up signal to a wake-up module in response to detecting a wake-up advertising packet transmitted from the Bluetooth remote control; and a wake-up module, located within the system chip, configured to wake up the television in response to receiving the wake-up signal.

In some embodiments, the Bluetooth module comprises a Bluetooth driver, configured to modify the value of the television state register in the Bluetooth chip from a second numerical value to the first numerical value using a preset suspend function and a secure digital input and output interface, wherein the second numerical value is configured to indicate that the television is in a working state.

In some embodiments, the system chip further comprises a wake-up pin; and the Bluetooth chip is configured to pull the wake-up pin down to a preset first low level to transmit a wake-up signal to the wake-up module.

In some embodiments, the wake-up pin comprises a general purpose input/output interface.

In some embodiments, the Bluetooth module comprises a Bluetooth protocol stack; the Bluetooth chip is configured to receive an advertising packet address and a wake-up identifier of the Bluetooth remote control transmitted by the Bluetooth remote control when the television and the Bluetooth remote control are in a connected state, and transmit the advertising packet address and the wake-up identifier to the Bluetooth protocol stack; and is further configured to receive and store the advertising packet address and wake-up identifier of the Bluetooth remote control; the Bluetooth protocol stack is configured to receive the advertising packet address and wake-up identifier of the Bluetooth remote control, and transmit the advertising packet address and wake-up identifier of the Bluetooth remote control to the Bluetooth chip; and the Bluetooth chip is configured to receive an advertising packet and parse the received advertising packet to obtain the advertising packet address and an advertising command; and in response to a determination that the parsed advertising packet address and advertising command match the stored advertising packet address and wake-up identifier of the Bluetooth remote control, respectively, determine that the wake-up advertising packet from the Bluetooth remote control has been detected.

In some embodiments, the Bluetooth chip is further configured to re-establish a connection with the Bluetooth remote control after the wake-up module wakes up the television.

In some embodiments, the Bluetooth module comprises: a Bluetooth protocol stack, configured to enter sleep state when the television enters sleep or standby state, further configured to transmit a reconnection command back to the Bluetooth chip in response to successfully restarting the Bluetooth protocol stack, and further configured to re-establish a connection with the Bluetooth remote control via the Bluetooth chip when the Bluetooth chip re-establishes a connection with the Bluetooth remote control; the Bluetooth module is further configured to transmit a clear to send signal to the Bluetooth chip after the wake-up module wakes up the television; and the Bluetooth chip is further configured to transmit a hardware error event to the Bluetooth protocol stack to restart the Bluetooth protocol stack in response to receiving the clear to send signal, further configured to monitor a connection advertising packet of the Bluetooth remote control in response to receiving the reconnection command, and further configured to re-establish a connection with the Bluetooth remote control in response to detecting a connection advertising packet transmitted by the Bluetooth remote control.

In some embodiments, the system chip further comprises a clear to send pin; and the system chip is configured to pull the clear to send pin down to a second low level, to transmit the clear to send signal to the Bluetooth chip.

In some embodiments, the clear to send pin comprises a universal asynchronous receiver-transmitter clear to send interface.

In some embodiments, a television system, comprising: the television and Bluetooth remote control provided by the embodiments of the present disclosure.

### BRIEF DESCRIPTION OF THE DRAWINGS

The accompanying drawings, which comprise a part of this specification, illustrate several embodiments and, together with the description, serve to explain the principles and features of the disclosed embodiments. In the drawings:
**FIG. 1** shows a schematic flow diagram of a television wake-up method provided by an embodiment of the present disclosure.
**FIG. 2** shows a schematic block diagram of a frame structure of a television provided by an embodiment of the present disclosure and its connection relationship with a Bluetooth remote control.
**FIG. 3** shows a schematic block diagram of a frame structure of a Bluetooth module provided by an embodiment of the present disclosure.

### DETAILED DESCRIPTION

Currently, the television wake-up methods using Bluetooth remote controls suffer from the problems of low speed and poor reliability.

Televisions equipped with Bluetooth remote controls typically use a breathing mechanism to wake up the television. Specifically, the television's system chip sends HCI commands to the Bluetooth chip in the Bluetooth module assembly based on a preset time period, the Bluetooth chip replies with an HCI event to the system chip of the television in response to receiving the HCI commands sent by the television's system chip. If the television has not received an HCI command sent from the television's system chip within the specified time period, the Bluetooth chip will determine that the television has entered sleep or standby state. It will then actively disconnect from the Bluetooth remote control and enter an advertising packet scanning state to detect wake-up advertising packets transmitted by the Bluetooth remote control. At this time, the user can broadcast a wake-up advertising packet to the television by pressing the wake-up button on the Bluetooth remote control. The Bluetooth chip transmits a wake-up signal to the television's system chip in response to detecting the wake-up advertising packet transmitted by the Bluetooth remote control, thereby waking up the television.

In the television wake-up methods described above, the Bluetooth chip and the television's system chip need to frequently exchange HCI commands and HCI events. On the one hand, the Bluetooth chip and the television's system chip need to frequently exchange HCI commands and HCI events, and the interaction cycle of HCI commands and HCI events is relatively long, reducing the speed at which the Bluetooth chip can detect when the television has entered sleep or standby state. On the other hand, HCI commands or HCI events may be lost during transmission process, causing the Bluetooth chip to incorrectly determine that the television has entered sleep or standby state.

To solve the above problems, the embodiments of the present disclosure provide a television wake-up method, the television comprises a system chip and a Bluetooth module assembly, the system chip comprises a Bluetooth module and a wake-up module, the Bluetooth module assembly comprises a Bluetooth chip, and the Bluetooth chip comprises a television state register, the television wake-up method comprising: when the television enters sleep or standby state, the Bluetooth module setting a value of the television state register to a first numerical value, wherein the first numerical value is configured to indicate that the television is in sleep or standby state; in response to a detection that the value of the television state register is the first numerical value, the Bluetooth chip disconnecting from the Bluetooth remote control and monitoring a wake-up advertising packet transmitted from the Bluetooth remote control; in response to detecting a wake-up advertising packet transmitted from the Bluetooth remote control, the Bluetooth chip transmitting a wake-up signal to the wake-up module; and in response to receiving the wake-up signal, the wake-up module waking up the television.

In some embodiments, a television, a television wake-up method, and a television system provided by embodiments of the present disclosure, wherein in the television wake-up method, when the television enters sleep or standby state, the Bluetooth module setting a value of the television state register to a first numerical value, allowing the Bluetooth chip in the television's Bluetooth module assembly to quickly and accurately obtain information about whether the television is in sleep or standby state through the numerical value in the television's state register, compared to the breathing mechanism that determines whether a television has entered sleep or standby state through repeated exchanges of HCI commands and HCI events between the Bluetooth module and the Bluetooth chip, the embodiments of the present disclosure shortens the time it takes for the Bluetooth chip to detect when the television has entered sleep or standby state, which prevents the Bluetooth chip from incorrectly obtaining information about whether the television has entered sleep or standby state by avoiding the loss of HCI commands or events, correspondingly improving the speed and reliability of the Bluetooth chip in detecting when the television has entered sleep or standby state, thereby enhancing the speed and reliability of the television wake-up operation.

To make the above purposes, features, and advantages of the present disclosure more apparent and easier to understand, a detailed description of specific embodiments of the present disclosure will be given below in conjunction with the accompanying drawings.

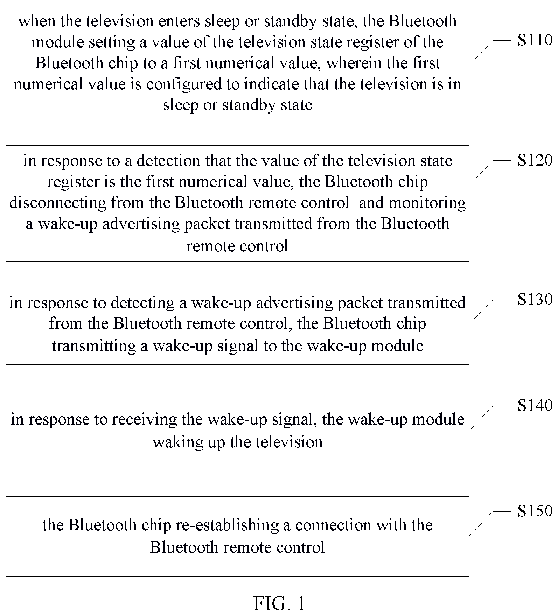

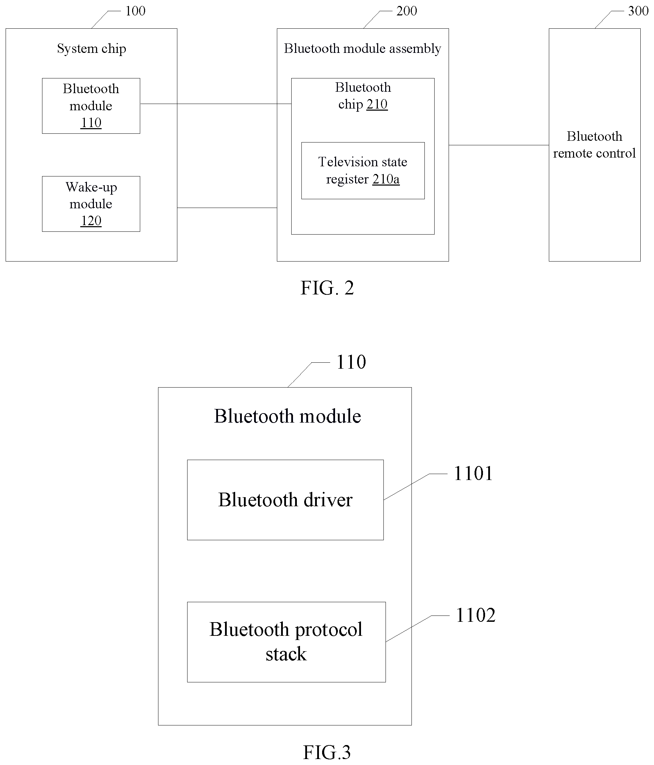

FIG. 1 shows a schematic flow diagram of a television wake-up method provided by an embodiment of the present disclosure; FIG. 2 shows a schematic block diagram of a frame structure of a television provided by an embodiment of the present disclosure and its connection relationship with a Bluetooth remote control; FIG. 3 shows a schematic block diagram of a frame structure of a Bluetooth module provided by an embodiment of the present disclosure. Referring to FIG. 1 to FIG. 3, a television wake-up method provided by an embodiment of the present disclosure, wherein the television comprises a system chip 100 and a Bluetooth module assembly 200, the system chip 100 comprises a Bluetooth module 110 and a wake-up module 120, the Bluetooth module assembly 200 comprises a Bluetooth chip 210, and the Bluetooth chip 210 comprises a television state register 210a, the television wake-up method may specifically comprise the following steps:
Step S110: when the television enters sleep or standby state, the Bluetooth module 110 setting a value of the television state register 210a of the Bluetooth chip 210 to a first numerical value, wherein the first numerical value is configured to indicate that the television is in sleep or standby state;
Step S120: in response to a detection that the value of the television state register 210a is the first numerical value, the Bluetooth chip 210 disconnecting from the Bluetooth remote control 300 and monitoring a wake-up advertising packet transmitted from the Bluetooth remote control 300;
Step S130: in response to detecting a wake-up advertising packet transmitted from the Bluetooth remote control 300, the Bluetooth chip 210 transmitting a wake-up signal to the wake-up module 120; and
Step S140: in response to receiving the wake-up signal, the wake-up module 120 waking up the television.

Referring to FIG. 1 to FIG. 3, in step S110, when the television enters sleep or standby state, the Bluetooth module 110 setting a value of the television state register 210a to a first numerical value, wherein the first numerical value is configured to indicate that the television is in sleep or standby state.

When the television enters sleep or standby state, the Bluetooth module 110 in the system chip 100 sets a value of the television state register 210a in the Bluetooth chip 210 to a first numerical value, providing a basis for the Bluetooth chip 210 in the Bluetooth module assembly 200 to disconnect from the Bluetooth remote control 300 and monitor a wake-up advertising packet transmitted from the Bluetooth remote control 300 in response to a detection that the value of the television state register 210a is the first numerical value.

In an embodiment of the present disclosure, the system chip 100 can be used to implement the main logic functions of a television system. Specifically, the system chip 100 may include a processor, memory, analog circuit modules, mixed-signal modules, and on-chip programmable logic devices, etc.

As an example, the system chip 100 is a System on Chip (SoC).

In an embodiment of the present disclosure, the system chip 100 comprises a Bluetooth module 110.

In an embodiment of the present disclosure, the Bluetooth module 110 is configured to realize communication between the system chip 100 and the Bluetooth module assembly 200, and the Bluetooth module assembly 200 is configured to realize communication between the system chip 100 and the Bluetooth remote control 300.

In an embodiment of the present disclosure, the Bluetooth module assembly 200 comprises a Bluetooth chip 210, and the Bluetooth chip 210 comprises a television state register 210a.

The television state register 210a is configured to record information of the current state of the television.

In an embodiment of the present disclosure, the television has working, sleep, or standby states. Correspondingly, when the value stored in the television state register 210a is a first numerical value, it indicates that the television is in sleep or standby state; when the value stored in the television state register 210a is a second numerical value, it indicates that the television is in working state.

When in sleep or standby state, the television reduces its power consumption and suspends some functions, thereby achieving power saving. At this time, waking up the television again allows it to quickly enter full-power working state.

Depending on actual needs, the television state register 210a can be any idle register in the Bluetooth chip 210, as long as the register can be configured to record the current state of the television and can be accessed by other external modules or devices. No restrictions are imposed here.

In an embodiment of the present disclosure, the television state register 210a is coupled to the Bluetooth module 110 of system chip 100 in the television, enabling the Bluetooth module 110 to access the television state register 210a in the Bluetooth chip 210 and set the value stored in the television state register 210a to the corresponding numerical value based on the current operating state of the television.

In an embodiment of the present disclosure, the Bluetooth module 110 comprises a Bluetooth driver 1101.

In an embodiment of the present disclosure, the Bluetooth driver 1101 and the television state register 210a are coupled through a Secure Digital Input and Output (SDIO) interface, thereby satisfying the Bluetooth driver 1101's access requirements to the television state register 210a.

In an embodiment of the present disclosure, a preset suspend function is registered within the Bluetooth driver 1101, and the instruction code of the suspend function is stored in the storage module of the system chip 100. The storage module of the system chip 100 can be flash memory, etc.

Correspondingly, when the television is in standby or sleep state, the Bluetooth driver 1101 calls the suspend function and accesses the television state register 210a through the secure digital input and output interface, setting the numerical value in the television state register 210a to a first numerical value to indicate that the television is in standby or sleep state.

In addition to the suspend function, other functions are also registered within the Bluetooth driver 1101, such as a probe function, a remove function, a resume function, a shutdown function and so on. The Bluetooth driver 1101 can perform corresponding operations by calling the functions registered within it.

The Bluetooth driver 1101 can be written using a corresponding driver format based on actual needs. As an example, the Bluetooth driver 1101 is written using the Linux standard platform driver format.

Referring to FIG. 1 to FIG. 3, in step S120, in response to a detection that the value of the television state register 210a is the first numerical value, the Bluetooth chip 210 disconnecting from the Bluetooth remote control 300 and monitoring a wake-up advertising packet transmitted from the Bluetooth remote control 300.

The Bluetooth chip 210 disconnects from the Bluetooth remote control 300 and monitors a wake-up advertising packet transmitted from the Bluetooth remote control 300 in response to a detection that the value of the television state register 210a is the first numerical value, providing a basis for the Bluetooth chip 210 to transmit a wake-up signal to the wake-up module 120 in the system chip 100 to wake up the television in response to detecting a wake-up advertising packet transmitted from the Bluetooth remote control 300.

In an embodiment of the present disclosure, the Bluetooth module assembly 200 further comprises a Bluetooth chip 210.

In an embodiment of the present disclosure, the television state register 210a is coupled to the Bluetooth chip 210, enabling the Bluetooth chip 210 to access the television state register 210a, thereby obtaining the information of the current state of the television.

In an embodiment of the present disclosure, when the Bluetooth driver 1101 calls the suspend function and accesses the television state register 210a through the secure digital input and output interface to set the numerical value in the television state register 210a to a first numerical value, the system will generate an interrupt to enable the Bluetooth chip 210 to access the television state register 210a to obtain information about whether the television is in sleep or standby state.

In other words, the Bluetooth driver 1101 calls the suspend function and accesses the television state register 210a through the secure digital input and output interface, and the time interval between the Bluetooth driver 1101 setting the numerical value in the television state register 210a to the first numerical value and the Bluetooth chip 210 accessing the television state register 210a is the interval between adjacent interrupts.

In the television wake-up method provided by the embodiment of the present disclosure, after the television enters sleep or standby state, the Bluetooth chip 210 only needs one interrupt time to obtain the information that the television has entered sleep or standby state. However, in existing breathing mechanisms where the Bluetooth chip and Bluetooth module repeatedly interact with HCI commands and HCI events, the Bluetooth chip typically only obtains the information indicating that the television has entered sleep or standby state when the reception time of the next HCI command arrives and no HCI command transmitted by the Bluetooth module is received.

Those skilled in the art will understand that the interval between adjacent HCI commands is relatively long, on the order of seconds, while the interval between adjacent interrupts is relatively short, on the order of microseconds, representing a difference of several orders of magnitude. Therefore, the Bluetooth chip in the embodiment of the present disclosure can quickly obtain the information indicating that the television has entered sleep or standby state when the television enters sleep or standby state, thus improving the speed at which the Bluetooth chip obtains the information indicating television has entered sleep or standby state.

More importantly, in the television wake-up method provided by the embodiment of the present disclosure, the Bluetooth module 110 sets the numerical value stored in the television state register 210a to the first numerical value, thereby transmitting the information that the television enters sleep or standby state to the Bluetooth chip 210. Compared with the existing breathing mechanism in which HCI commands and HCI events are repeatedly exchanged between the Bluetooth chip 210 and the Bluetooth module 110, the stability problem caused by frequent exchange of HCI commands and HCI events between the Bluetooth chip 210 and the Bluetooth module 110 can be avoided, and the loss of HCI commands or HCI events which causes the Bluetooth chip 210 to incorrectly determine that the television has entered sleep or standby state can be avoided, thus improving the reliability and stability of the Bluetooth chip 210 in obtaining information that the television has entered sleep or standby state.

In response to a detection that the value of the television state register 210a is the first numerical value, the Bluetooth chip 210 disconnects from the Bluetooth remote control 300, so as to reduce the power consumption of the television when in sleep or standby state, thereby achieving the purpose of power saving.

In an embodiment of the present disclosure, when the value of the television state register 210a is detected to be the first numerical value, the Bluetooth chip 210 transmits a link layer termination indication message to the Bluetooth remote control 300. The link layer termination indication message is transmitted through a notification protocol data unit (LL_TERMINATE_IND PDUs) whose connection is about to be closed.

Correspondingly, when receiving the notification protocol data unit whose connection is about to be closed, the Bluetooth remote control 300 replies with a link layer termination response message to the Bluetooth chip 210. At this time, the physical link between the Bluetooth chip 210 and the Bluetooth remote control 300 is disconnected.

Simultaneously, the Bluetooth chip 210 enters a monitoring state for advertising packets transmitted by the Bluetooth remote control 300, so that when detecting a wake-up advertising packet transmitted by the Bluetooth remote control 300, the Bluetooth chip 210 can promptly transmit a wake-up signal to the television's system chip 100, thereby enabling the television to be woken up in a timely manner.

Referring to FIG. 1 to FIG. 3, in step S130, in response to detecting a wake-up advertising packet transmitted from the Bluetooth remote control 300, the Bluetooth chip 210 transmitting a wake-up signal to the wake-up module 120.

In response to detecting a wake-up advertising packet transmitted from the Bluetooth remote control 300, the Bluetooth chip 210 transmitting a wake-up signal to the wake-up module 120, thereby providing a basis for the wake-up module 120 to subsequently perform the wake-up operation of the television.

Correspondingly, the Bluetooth chip 210 monitoring a wake-up advertising packet transmitted from the Bluetooth remote control300 comprises: the Bluetooth chip 210 parses the received advertising packet to obtain the information of advertising packet address and advertising command carried in the advertising packet; and in response to a determination that the parsed advertising packet address and advertising command match the stored advertising packet address and wake-up identifier of the Bluetooth remote control, respectively, the Bluetooth chip 210 determines that the wake-up advertising packet from the Bluetooth remote control 300 has been detected.

In an embodiment of the present disclosure, the Bluetooth remote control 300 may transmit a wake-up advertising packet when it is powered on again, or may also transmit a wake-up advertising packet when the user presses a specific wake-up button (such as the power button) on the Bluetooth remote control 300. The wake-up advertising packet is a nondirectional connectable advertising packet.

In an embodiment of the present disclosure, the wake-up advertising packet transmitted by the Bluetooth remote control 300 carries the information of the advertising packet address and wake-up identifier of the Bluetooth remote control 300.

Correspondingly, the Bluetooth chip 210 parses the received advertising packet to obtain the information of the source IP address and wake-up identifier carried in the advertising packet, compares the parsed source IP address and wake-up identifier with the stored advertising packet address and wake-up identifier of the Bluetooth remote control, respectively, and in response to a determination that the parsed source IP address and wake-up identifier match the stored advertising packet address and wake-up identifier of the Bluetooth remote control respectively, the Bluetooth chip 210 determines that a wake-up advertising packet transmitted by the Bluetooth remote control 300 has been detected.

In an embodiment of the present disclosure, the Bluetooth module 110 comprises a Bluetooth protocol stack 1102. In a specific implementation, the Bluetooth protocol stack 1102 typically includes a controller, a host control interface (HCI), and a host. The controller communicates with the host through the host control interface.

Correspondingly, when the television and the Bluetooth remote control 300 are in a connected state, the television wake-up method further comprising: the Bluetooth protocol stack 1102 transmitting the advertising packet address and wake-up identifier of the Bluetooth remote control 300 to the Bluetooth chip 210; and the Bluetooth chip 210 receiving and storing the advertising packet address and wake-up identifier of the Bluetooth remote control 300.

When the television and Bluetooth remote control 300 are in a connected state and the television is about to enter standby or sleep state, the Bluetooth protocol stack 1102 transmits the advertising packet address and wake-up identifier of the Bluetooth remote control 300 to the Bluetooth chip 210, so that the Bluetooth chip 210 can accurately identify the wake-up advertising packet during scanning. Subsequently, when television enters standby or sleep state, the Bluetooth protocol stack 1102 enters sleep state.

In response to detecting a wake-up advertising packet transmitted from the Bluetooth remote control 300, the Bluetooth chip 210 transmits a wake-up signal to the wake-up module 120 in the system chip 100, thereby providing a basis for the wake-up module 120 to subsequently perform the wake-up operation of the television.

In an embodiment of the present disclosure, the system chip 100 further comprises a wake-up pin (not shown). Correspondingly, the Bluetooth chip 210 transmitting a wake-up signal to the wake-up module 120 comprises: the Bluetooth chip 210 pulls the wake-up pin down to a preset first low level to transmit a wake-up signal to the wake-up module 120.

The Bluetooth chip 210 pulls the wake-up pin down to a preset first low level, meaning that the Bluetooth chip 210 pulls down the wake-up pin from a preset first high level to the preset first low level. The wake-up pin has a first high level by default.

Depending on the actual needs, the wake-up pin can be any suitable input interface. As an example, the wake-up pin is a General Purpose Input/Output (GPIO) interface. In other embodiments, the wake-up pin can also be other types of input interfaces, which are not limited here.

Referring to FIG. 1 to FIG. 3, in step S140, in response to receiving the wake-up signal, the wake-up module 120 waking up the television.

In an embodiment of the present disclosure, when detecting that the wake-up pin is pulled down to the first low level, the wake-up module 120 executes the television wake-up process to wake up the television.

Referring to FIG. 1 to FIG. 3, after the wake-up module waking up the television, the television wake-up method further comprising: step S150: the Bluetooth chip 210 re-establishing a connection with the Bluetooth remote control 300.

In an embodiment of the present disclosure, the Bluetooth module 110 comprises a Bluetooth protocol stack 1102. When the television enters sleep or standby state, the Bluetooth protocol stack 1102 enters sleep state.

In an embodiment of the present disclosure, the Bluetooth chip 210 re-establishing a connection with the Bluetooth remote control 300 comprises: after the wake-up module 120 wakes up the television, the Bluetooth module 110 transmits a clear to send signal to the Bluetooth chip 210; in response to receiving the clear to send signal, the Bluetooth chip 210 transmits a hardware error event to the Bluetooth protocol stack 1102 to restart the Bluetooth protocol stack 1102; in response to successfully restarting the Bluetooth protocol stack 1102, the Bluetooth protocol stack 1102 transmits a reconnection command back to the Bluetooth chip 210; the Bluetooth chip 210 monitors a connection advertising packet of the Bluetooth remote control 300 in response to receiving a reconnection command; and in response to detecting the connection advertising packet transmitted by the Bluetooth remote control 300, the Bluetooth chip 210 re-establishes a connection with the Bluetooth remote control 300, enabling the Bluetooth protocol stack 1102 to re-establish a connection with the Bluetooth remote control 300 via the Bluetooth chip 210.

Specifically, the system chip 100 further comprises a clear to send pin, the clear to send pin is configured to transmit a clear to send signal to the Bluetooth chip 210 in the Bluetooth module assembly 200 by the system chip 100, enabling the Bluetooth chip 210 to transmit data to the Bluetooth module 110 in the system chip 100 when receiving the clear to send signal.

In an embodiment of the present disclosure, the step of Bluetooth module 110 transmitting a clear to send signal to the Bluetooth chip comprises: the system chip 100 pulls the clear to send pin down to a second low level, to transmit the clear to send signal to the Bluetooth chip 210.

In an embodiment of the present disclosure, after the television is woken up, the system chip 100 and the Bluetooth module assembly 200 communicate and interact through the Universal Asynchronous Receiver-Transmitter (UART) interface. Correspondingly, the clear to send pin comprises the Universal Asynchronous Receiver-Transmitter Clear To Send (UART CTS) interface.

In response to receiving the clear to send signal, the Bluetooth chip 210 transmits a hardware error event to the Bluetooth protocol stack 1102 to restart the Bluetooth protocol stack 1102.

In response to successfully restarting the Bluetooth protocol stack 1102, the Bluetooth protocol stack 1102 transmits a reconnection command (HCI_LE_Create_Connection Command) back to the Bluetooth chip 210. The Bluetooth chip 210 enters the monitoring state for connection advertising packet in response to receiving a reconnection command. Subsequently, in response to detecting the connection advertising packet transmitted by the Bluetooth remote control 300, the Bluetooth chip 210 re-establishes a connection with the Bluetooth remote control 300. After the Bluetooth chip 210 re-establishes a connection with the Bluetooth remote control 300, the Bluetooth protocol stack 1102 re-establishes a connection with the Bluetooth remote control 300 through the Bluetooth chip 210.

To solve the above problems, the embodiments of the present disclosure provide a television.

Referring to FIG. 2, a television, comprising: a system chip 100 and a Bluetooth module assembly 200, wherein the system chip 100 comprises a Bluetooth module 110 and a wake-up module 120, the Bluetooth module assembly 200 comprises a Bluetooth chip 210 and a television state register 210a, wherein: the Bluetooth module 110 is configured to set a value of the television state register 210a to a first numerical value when the television enters sleep or standby state, wherein the first numerical value is configured to indicate that the television is in sleep or standby state; the Bluetooth chip 210 is configured to disconnect from the Bluetooth remote control 300 and monitor a wake-up advertising packet transmitted from the Bluetooth remote control 300 in response to a detection that the value of the television state register 210a is the first numerical value; the Bluetooth chip 210 is further configured to transmit a wake-up signal to the wake-up module 120 in response to detecting a wake-up advertising packet transmitted from the Bluetooth remote control 300; and the wake-up module 120 is configured to wake up the television in response to receiving the wake-up signal.

The television in the embodiment of the present disclosure may be configured to perform the television wake-up method in the foregoing embodiments. The television and Bluetooth remote control are described in the foregoing embodiments of the present disclosure and will not be repeated here.

To solve the above problems, the embodiments of the present disclosure provide a television system, comprising: the television and Bluetooth remote control provided by the embodiments of the present disclosure. The television and Bluetooth remote control are described in the foregoing embodiments of the present disclosure and will not be repeated here.

Although the embodiments of the present disclosure are disclosed as above, the present disclosure is not limited thereto. Any person skilled in the art may make various changes and modifications without departing from the spirit and scope of the present disclosure, and therefore the scope of protection of the present disclosure shall be subject to the scope defined by the claims.

## Claims

1. A television, comprising:
a Bluetooth module, located within a system chip, configured to set a value of a television state register to a first numerical value when the television enters sleep or standby state, wherein the first numerical value is configured to indicate that the television is in sleep or standby state;
a Bluetooth chip, located within a Bluetooth module assembly, the Bluetooth chip comprising a television state register, configured to disconnect from a Bluetooth remote control and monitor a wake-up advertising packet transmitted from the Bluetooth remote control in response to a detection that the value of the television state register is the first numerical value, and further configured to transmit a wake-up signal to a wake-up module in response to detecting a wake-up advertising packet transmitted from the Bluetooth remote control; and
a wake-up module, located within the system chip, configured to wake up the television in response to receiving the wake-up signal.

2. The television of claim 1, wherein the Bluetooth module comprises a Bluetooth driver, configured to modify the value of the television state register in the Bluetooth chip from a second numerical value to the first numerical value using a preset suspend function and a secure digital input and output interface, wherein the second numerical value is configured to indicate that the television is in a working state.

3. The television of claim 2, wherein the system chip further comprises a wake-up pin; and
wherein the Bluetooth chip is configured to pull the wake-up pin down to a preset first low level to transmit a wake-up signal to the wake-up module.

4. The television of claim 3, wherein the wake-up pin comprises a general purpose input/output interface.

5. The television of claim 1, wherein the Bluetooth module comprises a Bluetooth protocol stack;
wherein the Bluetooth chip is configured to receive an advertising packet address and a wake-up identifier of the Bluetooth remote control transmitted by the Bluetooth remote control when the television and the Bluetooth remote control are in a connected state, and transmit the advertising packet address and the wake-up identifier to the Bluetooth protocol stack; and is further configured to receive and store the advertising packet address and wake-up identifier of the Bluetooth remote control;
the Bluetooth protocol stack is configured to receive the advertising packet address and wake-up identifier of the Bluetooth remote control, and transmit the advertising packet address and wake-up identifier of the Bluetooth remote control to the Bluetooth chip; and
the Bluetooth chip is configured to receive an advertising packet and parse the received advertising packet to obtain the advertising packet address and an advertising command; and in response to a determination that the parsed advertising packet address and advertising command match the stored advertising packet address and wake-up identifier of the Bluetooth remote control, respectively, determine that the wake-up advertising packet from the Bluetooth remote control has been detected.

6. The television of any one of claims 1 to 5, wherein the Bluetooth chip is further configured to re-establish a connection with the Bluetooth remote control after the wake-up module wakes up the television.

7. The television of claim 6, wherein the Bluetooth module comprises: a Bluetooth protocol stack, configured to enter sleep state when the television enters sleep or standby state, further configured to transmit a reconnection command back to the Bluetooth chip in response to successfully restarting the Bluetooth protocol stack, and further configured to re-establish a connection with the Bluetooth remote control via the Bluetooth chip when the Bluetooth chip re-establishes a connection with the Bluetooth remote control;
wherein the Bluetooth module is further configured to transmit a clear to send signal to the Bluetooth chip after the wake-up module wakes up the television; and
wherein the Bluetooth chip is further configured to transmit a hardware error event to the Bluetooth protocol stack to restart the Bluetooth protocol stack in response to receiving the clear to send signal, further configured to monitor a connection advertising packet of the Bluetooth remote control in response to receiving the reconnection command, and further configured to re-establish a connection with the Bluetooth remote control in response to detecting a connection advertising packet transmitted by the Bluetooth remote control.

8. The television of claim 7, wherein the system chip further comprises a clear to send pin; and
the system chip is configured to pull the clear to send pin down to a second low level, to transmit the clear to send signal to the Bluetooth chip.

9. The television of claim 8, wherein the clear to send pin comprises a universal asynchronous receiver-transmitter clear to send interface.

10. A television system, comprising: the television and a Bluetooth remote control of any one of claims 1 to 9.

11. A television wake-up method, comprising:
when the television enters sleep or standby state, using a Bluetooth module in a system chip of the television to set a value of a television state register in a Bluetooth chip to a first numerical value;
in response to a detection that the value of the television state register is the first numerical value, using a Bluetooth chip in a Bluetooth module assembly of the television to disconnect from a Bluetooth remote control and monitor a wake-up advertising packet transmitted from the Bluetooth remote control;
in response to detecting a wake-up advertising packet transmitted from the Bluetooth remote control, using the Bluetooth chip to transmit a wake-up signal to a wake-up module in the system chip of the television; and
in response to receiving the wake-up signal, using the wake-up module to wake up the television.

12. The television wake-up method of claim 11, wherein the Bluetooth module comprises a Bluetooth driver; and
setting a value of the television state register in the Bluetooth chip to a first numerical value comprises: the Bluetooth driver modifying the value of the television state register in the Bluetooth chip from a second numerical value to the first numerical value using a preset suspend function and a secure digital input and output interface, wherein the second numerical value is configured to indicate that the television is in a working state.

13. The television wake-up method of claim 12, wherein the system chip further comprises a wake-up pin; and
using the Bluetooth chip to transmit a wake-up signal to the wake-up module comprises: using the Bluetooth chip to pull the wake-up pin down to a preset first low level to transmit a wake-up signal to the wake-up module.

14. The television wake-up method of claim 13, wherein the wake-up pin comprises a general purpose input/output interface.

15. The television wake-up method of claim 11, wherein the Bluetooth module comprises a Bluetooth protocol stack;
when the television and the Bluetooth remote control are in a connected state, the television wake-up method further comprising: using the Bluetooth chip to receive an advertising packet address and a wake-up identifier of the Bluetooth remote control transmitted by the Bluetooth remote control, and transmit the advertising packet address and the wake-up identifier to the Bluetooth protocol stack; using the Bluetooth protocol stack to receive the advertising packet address and wake-up identifier of the Bluetooth remote control, and transmit the advertising packet address and wake-up identifier of the Bluetooth remote control to the Bluetooth chip; and using the Bluetooth chip to receive and store the advertising packet address and wake-up identifier of the Bluetooth remote control; and
using the Bluetooth chip to monitor a wake-up advertising packet transmitted from the Bluetooth remote control comprises: using the Bluetooth chip to receive an advertising packet and parse the received advertising packet to obtain the advertising packet address and an advertising command; and in response to a determination that the parsed advertising packet address and advertising command match the stored advertising packet address and wake-up identifier of the Bluetooth remote control, respectively, the Bluetooth chip determining that the wake-up advertising packet from the Bluetooth remote control has been detected.

16. The television wake-up method of any one of claims 11 to 15, wherein after using the wake-up module to wake up the television, the method further comprising:
using the Bluetooth chip to re-establish a connection with the Bluetooth remote control.

17. The television wake-up method of claim 16, wherein the Bluetooth module comprises a Bluetooth protocol stack;
when the television enters sleep or standby state, the Bluetooth protocol stack enters sleep state; and
using the Bluetooth chip to re-establish a connection with the Bluetooth remote control comprises: after the wake-up module wakes up the television, using the Bluetooth module to transmit a clear to send signal to the Bluetooth chip; in response to receiving the clear to send signal, using the Bluetooth chip to transmit a hardware error event to the Bluetooth protocol stack to restart the Bluetooth protocol stack; in response to successfully restarting the Bluetooth protocol stack, using the Bluetooth protocol stack to transmit a reconnection command to the Bluetooth chip; using the Bluetooth chip to monitor a connection advertising packet of the Bluetooth remote control in response to receiving the reconnection command; and in response to detecting the connection advertising packet transmitted by the Bluetooth remote control, using the Bluetooth chip to re-establish a connection with the Bluetooth remote control, enabling the Bluetooth protocol stack to re-establish a connection with the Bluetooth remote control via the Bluetooth chip.

18. The television wake-up method of claim 17, wherein the system chip further comprises a clear to send pin; and
transmitting a clear to send signal to the Bluetooth chip comprises: using the system chip to pull the clear to send pin down to a second low level, to transmit the clear to send signal to the Bluetooth chip.

19. The television wake-up method of claim 18, wherein the clear to send pin comprises a universal asynchronous receiver-transmitter clear to send interface.

20. The television wake-up method of claim 11, wherein the system chip is a system on chip.
